# EUROPEAN PATENT APPLICATION

(11) **EP 2 226 213 A2**
(43) Date of publication of application: **08.09.2010**
(21) Application number: 10397504.1
(22) Date of filing: 02.03.2010
(51) Int. Cl.: B60K 17/28, F16H 37/02

(54) **Power transmission arrangement in front of a tractor**

(30) Priority: 02.03.2009 FI 20095203
(71) Applicant: LH Lift Oy, 41370 Kuusa (FI)
(72) Inventor: Riipinen, Tapio, 41340, LAUKAA (FI); Puustinen, Sami, 40340, JYVÄSKYLÄ (FI)
(74) Representative: Helke, Kimmo Kalervo

(57) **Abstract**

The invention relates to a power transmission arrangement in front of a tractor, which includes a gearbox (15, 8) providing selective transmission ratios and an externally controlled reversing unit (13) for selecting the rotation direction from the cab.

## Description

The present invention relates to a power transmission arrangement in front of a tractor, which includes a gearbox providing selective transmission ratios and to which power transmission arrangement a power take-off for an implement is attached. The invention particularly relates to an arrangement, in which there is a quick-selection gear.

Several tractor manufacturers have had a few transmission alternatives in production for a long time already. Up until now, the most typical rear transmission has been a fixed-step fully mechanical gearbox, which is coupled to the engine by a hydraulic clutch. In front, a reduction gear, with a light construction on-off switch, coupled to the end of the crankshaft by an elastic clutch. Generally, this is implemented using a electro-hydraulic plate clutch. Some manufacturers have a manually operated reversing unit (front PTO) attached to this gearbox. The driver must leave the cab to operate this lever.

In recent years, a stepless gearbox (CVT) has also been shown in connection with a power take-off (PTO). Patent publication US 6942595 discloses one such PTO system, in which there are, in addition, control means, by which the gearbox is controlled depending on the implement, as there are sensors in the implement to measure the loading parameters and it is connected by a data-transfer link (CAN BUS) to the control means. The stepless gearbox and engine are controlled in such a way that the implement always has optimal rotation speed and power. In addition, the system also prevents the overloading of the implement.

In addition to a fixed-step cylindrical gear in the driving transmission, several manufacturers have had for a long time an optional planet gearbox equipped with a multi-disc clutch, to create more gear ratios. Examples are the driving transmission packages available in Valmet and Valtra models already from 1994 (Mertz and Mega models), in which there is the said quick-selection gear and a reversing gear for the tractor, operated from the cab by a lever. Starting from 1997, a multi-disc reversing gear has been available. Some models of this type are the Valmet 600-8750 Delta Powershift and the Valtra 6250-8950 Multidisc shuttle. Other manufacturers have had similar units in different arrangements related to the driving transmission.

The present invention is intended to diversify the use of the front power take-off in a simple manner. The characteristic features of the arrangement according to the invention are stated in Claim 1. The arrangement preferably includes a reversing-gear-planet-gearbox unit, as well as a fixed gear ratio in the gearbox unit. Such a combination is surprising, as it is assembled mainly from readily available products used in a driving transmission and permits the PTO to be adapted to a few of the most used rpms. One preferred solution can be assembled using a planet gearbox used in the driving transmission and a conventional cylindrical gear used in the front PTO. The use of such a solution is supported by the fact that the planet gearbox always operates on the side of the highest rpm, so that the torques remain correspondingly lower than if the planet gearbox were to convert the number of rpms directly finally. Thus, in this combination, the size and torque of the planet gearbox can be substantially smaller than when using only a planet gearbox.

Alternatively, a stepless gearbox is equipped with a reversing unit, in which case a wider range of alternative rpms will be available. In general, the combination of a selective rpm range and reversing device controlled from the cab is central to the present invention.

In one application, the reversing and transmission ration controlled from the cab are complemented by a three-point coupling controlled from the cab. Thus, all the connections and settings relating to an implement can be made without getting out of the cab.

Other benefits and embodiments of the invention appear in connection with the application examples.

In the following, the invention is described with the aid of examples and the accompanying drawings, in which
Figure 1 shows one arrangement, according to the invention, of the front transmission of a tractor, from the engine to an implement,
Figure 2 shows an axonometric view of one arrangement of the front transmission, in connection with a three-point coupling, and
Figure 3 shows a variation of Figure 1, in which a stepless gearbox is used as the gearbox.

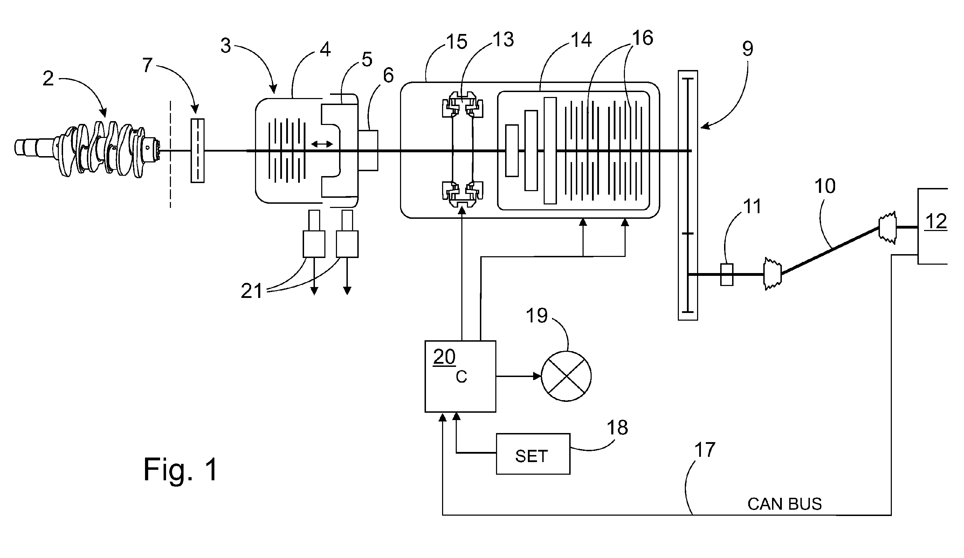

In Figure 1, the implement has been envisaged as being coupled conventionally by a three-point coupling. However, nothing more than the transmission part and a possible data-transfer link are shown from this coupling. From the tractor's engine, which is represented by the crankshaft 2, torque is led through the drive train to the power take-off 11 (PTO), from where it is led by a articulated shaft 10 to the implement 12.

In a mechanical coupling, the crankshaft 2 is coupled by an elastic clutch 7 to a hydraulically operated multi-disc, i.e. plate clutch 3, which is depicted as being of the type disclosed in publication EP49632A2. The driving part 4 is connected to the driven part 5, controlled by the operating device 6. The plate clutch 3 drives the combined reversing-quick-selection gear 15. The reversing unit 13 and the planet gearbox 14 can be of some known type, for example, a type used in a driving transmission. The quick-selection gear 14 drives a fixed-step cylindrical gear 9, which drives the power take-off 11 (PTO). This is coupled, in a known manner by a articulated shaft 10, to the power intake shaft of the implement 12. In terms of the present invention, the reversing-quick-selection gear 15 is the central component, and its operation is described hereinafter.

The safety-operations control system comprises a drive-train torque detector, which can be of the same type as the detector arrangement in the said EP publication, or a separate torque detector. Detection can take place as described in the EP publication, by using sensors 21 to detect the difference in speed, i.e. the slip, of the halves of the plate clutch 3.

A controller device 20 controls the reversing unit 13 and the multi-disc clutch 16 of the planet gearbox 14, through special operating devices (not shown). Control takes place either from a control panel 18, or automatically, for example, according to the parameters of the implement 12, which information is transmitted over a data-transfer link 17 (CAN BUS) from the implement 12 or simply from the 3-point coupling counterpiece, using selected codes (not shown).

The controller device 20 preferably contains software means for implementing various types of loading protection. The loading protection contains criteria for uncoupling and then re-coupling, which depend on the implement coupled at the time. Thus, the implement determines the protection profile being used at any particular time, which the controller device implements by means of the clutch.

The coupled power transmission capacity of the clutch creating the protection functionality is preferably at least 40 %, most preferably at least 60 % of the nominal torque. Thus, in this respect, the clutch must be selected to be larger than that required by the normal operation of an implement. One preferred clutch type is a multi-disc clutch, which can be loaded with a high power and can perform consecutive uncoupling and coupling. In addition, it must be able to withstand a considerable amount of slip. For example, a freewheel functionality can no longer be implemented on the articulated shaft, if the direction of rotation of the front power take-off can be changed. Thus, it will be necessary to use a powerful clutch in the manner referred to above in connection with controlled reversing, if this functionality relates to the loading protection of the implement.

In the case of a possible problem situation, the controller unit 20 also controls an alarm (sound warning and/or light).

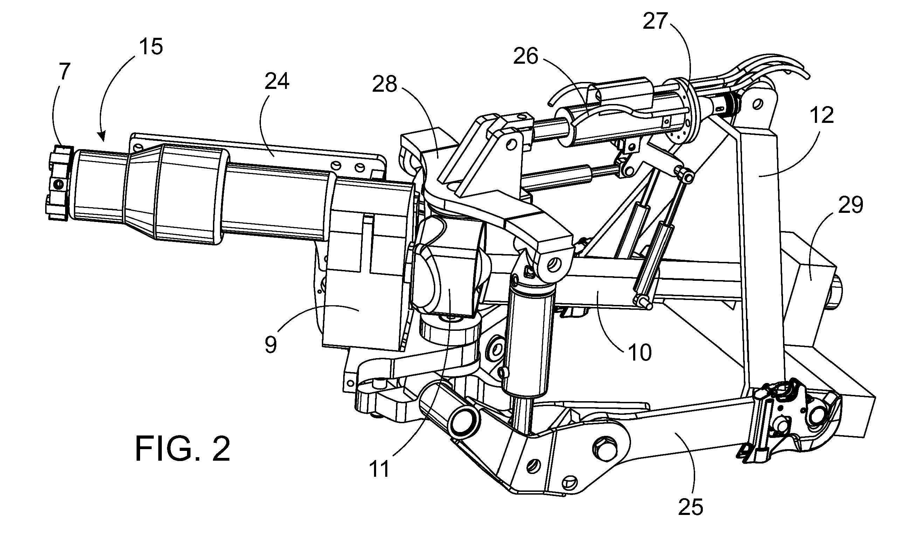

According to Figure 2, the transmission arrangement according to the invention is preferably constructed as a front PTO, for example, in connection with the rotating 3-point coupling that is disclosed in publication WO 2008/046958. In addition, Figure 2 shows a coupling aid of a 3-point coupling, in a rotating frame 28. The coupling aid comprises the connection means of the upper link arm 26 and the handling means, by which the docking of the articulated shaft 10 is performed in the counterpiece 29, after the lower link arms 25 have been locked in place and the upper link arm 26 has been attached, connecting at the same time the hydraulic and electrical connections by means of the connector 27.

The application of Figure 2 differs from the diagram in Figure 1, in that the flexible connection 7 is attached directly to the unit 15, thus omitting the plate clutch 3. In this case, it is replaced by the multi-disc clutches 16 of the planet gearbox 14, which, when not under pressure, do not transmit torque. The unit 15 is attached to the tractor's chassis flexibly through a flange 24, to which the countertorque is thus transmitted. As such, the unit 15 is a known driving transmission component. The construction of Figure 2 is cut away so that the cylindrical gear 9 can be seen clearly. The torque is thus transmitted from the flexible clutch 7 through the unit 15 to the fixed-ration gear 9, the output shaft of which forms the power take-off (PTO). The articulated shaft (in this case together with the docking aid) is attached to it and at the other end to the PTO counterpiece 29 in the implement 12.

Because the gearbox totality according to Figure 2 can easily be controlled from outside, the durability of the transmission is substantially improved, because the transmission's parameters (for instance, the speed and direction of rotation) can be adapted to suit the implement.

Generally, the gearbox package according to Figure 2 can include the following combinations:
1) quick-selection gear + mechanical reduction gear,
2) quick-selection gear + mechanical reverser + mechanical reduction gear,
3) quick-selection gear + hydraulic multi-disc reverser + mechanical reduction gear.

In the first two combinations, the multi-disc clutches of the quick-selection gear act as overload protectors and a freewheel, whereas, in the third combination, their function is performed by the hydraulic multi-disc clutch. The clutch is controlled electronically by a controller, which, according to the rotation speed and information obtained from the torque sensors, opens the corresponding multi-disc clutch, in order to protect the system.

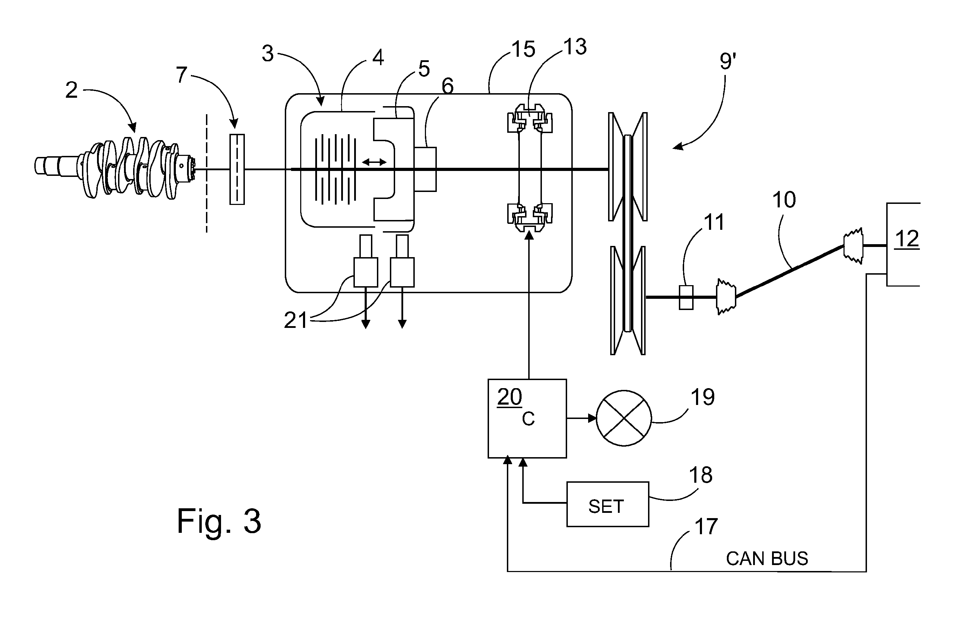

According to Figure 3, a variomatic gearbox will simplify the front drive train considerably. The same reference numbers as in Figure 1 are used for components that are functionally similar. Thus, the following components are exactly the same: crankshaft 2, elastic clutch 7, power take-off 11 (PTO), articulated shaft 10, and implement 12, as well as electronic control through a controller device 20.

On the other hand, the multi-disc i.e. plate clutch 3 is combined in the same unit 15 as the reversing unit 13. In addition, instead of a planet gearbox and a fixed-step reduction gear, in this case there is only a variomatic transmission 9', by means of which the reduction ratio can be adjusted freely within a selected range, for example, 1,33 - 2,67 to 1, in which case 2000 rpm will give the implement the range 750 - 1500 rpm.

## Claims

1. Power transmission arrangement in front of a tractor, which includes a gearbox (15, 8) providing selective transmission ratios, **characterized in that** the power transmission arrangement further includes an externally controlled reversing unit (13), for selecting the rotation direction from the cab.

2. Power transmission arrangement (10) according to Claim 1, **characterized in that** the gearbox (9) comprises a gearbox (9) with a fixed gear ratio, in addition to the controlled planet gearbox (15).

3. Power transmission arrangement (10) according to Claim 1, **characterized in that** the gearbox (9') is a variomatic type gearbox, permitting a freely selectable gear ratio.

4. Arrangement (10) according to any of Claims 1 - 3, **characterized in that** it includes a data connection (17) for receiving the parameters of an implement.

5. Arrangement (10) according to any of Claims 1 - 3, **characterized in that** it includes quick-selection means for selecting the parameters of the selected implement, the parameters determining the rotation direction and/or the gear ratio.

6. Arrangement (10) according to any of Claims 1 - 5, **characterized in that** the electronically controlled multi-disc clutches of the quick-selection gear act as an overload clutch and/or freewheel.

7. Arrangement (10) according to any of Claims 1 - 6, **characterized in that** it includes a clutch (3) with a high-power coupling transmission capacity, which at the same time acts as an electronically controlled overload clutch and/or freewheel.

8. Power transmission arrangement (10) according to Claim 7, **characterized in that** the clutch (3) is a hydraulic multi-disc clutch.
